# EUROPEAN PATENT APPLICATION

(11) **EP 4 715 421 A2**
(43) Date of publication of application: **25.03.2026**
(21) Application number: 25201935.1
(22) Date of filing: 12.09.2025
(51) Int. Cl.: G01S 7/02, G01S 13/931

(54) **RADAR DEVICE FOR INSTALLING ON VEHICLE AND INSTALLING METHOD**

(30) Priority: 24.09.2024 TW 113136175; 04.07.2025 TW 114125432
(71) Applicant: Arcadyan Technology Corporation, Hsinchu City 30071 (TW)
(72) Inventor: HUANG, Kuan-Lin, 351 Toufen City, Miaoli County (TW); KUO, Shin-Lung, 820 Kaohsiung City (TW)
(74) Representative: Krauns, Christian

(57) **Abstract**

A radar device for being installed on a vehicle is provided by the present disclosure. The radar device comprises a radar module configured to generate a radar detection area, and an adjustment mechanism. The adjustment mechanism includes a vehicle installation part configured to be mounted on a first side of the vehicle. The adjustment mechanism also includes a radar mounting part pivotally connected to the vehicle installation part. The radar mounting part is able to be pivoted relative to the vehicle installation part, and the radar mounting part is configured to secure the radar module.

## Description

### BACKGROUND OF THE INVENTION

### Field of the Invention

The present disclosure is related to techniques of a radar device installed on a vehicle, and particularly, to an installation method for a radar device with adjustment mechanism corresponding to radar module.

### Description of the Related Art

The radar device installed in front of the vehicle needs to be adjusted and installed considering the installation height and position. Due to various vehicle models, the installation position on the front or rear side of the vehicle may be restricted. For example, other components such as a trailer hook, license plate or other devices may have been installed on the front or rear side of the vehicle. Since the positions where the radar device can be installed on the front or rear side of each vehicle are different, some may be high and some may be low. If the radar device is installed low, it is easily interfered by the ground. If the radar device is installed high, it cannot detect objects close to the ground, which may cause unnecessary warnings or false alarms. Furthermore, when the radar is installed on the front side of the vehicle, the radar module in the radar device needs to be fixed and protected, and the radar signals it transmits and/or receives cannot be interfered with by related components. Therefore, there is a need for techniques of adjusting detection areas of radar devices after installation and protecting the radar module in the radar device without interfering with radar signals.

### SUMMARY OF THE INVENTION

The present disclosure is related to techniques of a radar device with an adjustment mechanism, which can adjust the angle of the radar beam generated by the radar module according as demands, and adjust and set the detection area of the radar module according to the relevant information such as the location of the vehicle installed. Also, the present disclosure also related to techniques of radar device with the adjustment mechanism corresponding to and protecting the radar module therein, and the adjustment mechanism without interfering with the radar module transmitting and/or receiving radar signals.

According to a first aspect of the present disclosure, a radar device for being installed on a vehicle is provided. The radar device includes a radar module configured to generate a radar detection area. The radar device also includes an adjustment mechanism. The adjustment mechanism includes a vehicle installation part configured to be mounted on a first side of the vehicle. The adjustment mechanism also includes a radar mounting part pivotally connected to the vehicle installation part. The radar mounting part is able to be pivoted relative to the vehicle installation part, and the radar mounting part is configured to secure the radar module.

According to a second aspect of the present disclosure, a method for installing a radar device for a vehicle on the ground is provided. The installation method includes providing a radar device configured to generate a radar detection area. The installation method also includes mounting the radar device on a first side of the vehicle. The radar device includes a first side facing a direction of a radar beam, and a second surface facing the first side of the vehicle, and an inclination angle is between the first surface and the second surface. The installation method also includes obtaining a first width of the first side, a horizontal distance between the radar device and a vertical center line of the first side, and a vertical distance between a center point of the radar device and the ground. The installation method also includes adjusting and fixing the inclination angle between the first surface and the second surface of the radar device according to the vertical distance. The installation method also includes setting a warning area in the radar detection area according to the first width, the horizontal distance, the vertical distance and the inclination angle. The warning area includes a first width not less than the first width.

According to a third aspect of the present disclosure, a radar device for being installed on a vehicle is provided. The radar device includes a radar module. The radar module includes an antenna configured for transmitting or receiving radar signals, and a signal connector. The radar device also includes a case covering the antenna and the signal connector. The case includes an antenna area corresponding to the antenna and a connection part surrounding the signal connector. The radar device also includes an adjustment mechanism. The adjustment mechanism includes a radar mounting part configured for mounting the radar module on the vehicle. The radar mounting part includes an antenna window and a connector protector. The antenna window exposes the antenna area, and the connector protector covers the connection part.

The above and other aspects of the invention will become better understood with regard to the following detailed description of the preferred but non-limiting embodiment(s). The following description is made with reference to the accompanying drawings.

### BRIEF DESCRIPTION OF THE DRAWINGS

FIG. 1A is a diagram illustrating an example radar device according to one or more embodiments of the present disclosure.
FIG. 1B is a diagram illustrating back view of the example radar device according to one or more embodiments of the present disclosure.
FIGs. 1C and 1D are diagrams respectively illustrating two side views of the example radar device according to one or more embodiments of the present disclosure.
FIGs. 1E and 1F are diagrams respectively illustrating angle adjustment settings on two sides of the example radar device according to one or more embodiments of the present disclosure.
FIG. 1G is a diagram illustrating front view of the example radar device according to one or more embodiments of the present disclosure.
FIG. 1H is a diagram illustrating exploded view of the example radar device according to one or more embodiments of the present disclosure.
FIG. 1I is a diagram illustrating front perspective view of the example radar device according to one or more embodiments of the present disclosure.
FIG. 1J is a function block diagram illustrating inner components of a radar module according to one or more embodiments of the present disclosure.
FIGs. 2A to 2C are diagrams respectively illustrating the example radar device installed on a vehicle according to one or more embodiments of the present disclosure.
FIGs. 3A to 3E are diagrams respectively illustrating settings of the example radar device installed on a vehicle according to one or more embodiments of the present disclosure.
FIG. 4 is a flowchart illustrating an installation process of the example radar device according to one or more embodiments of the present disclosure.

Like reference numbers and designations in the various drawings indicate like elements. It is also to be understood that the various exemplary implementations shown in the figures are merely illustrative representations and are not necessarily drawn to scale.

### DETAILED DESCRIPTION OF THE INVENTION

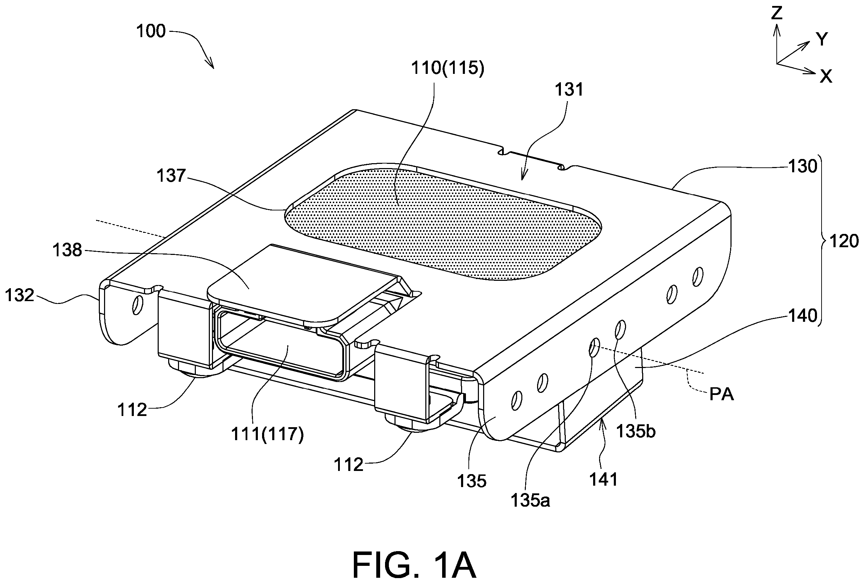

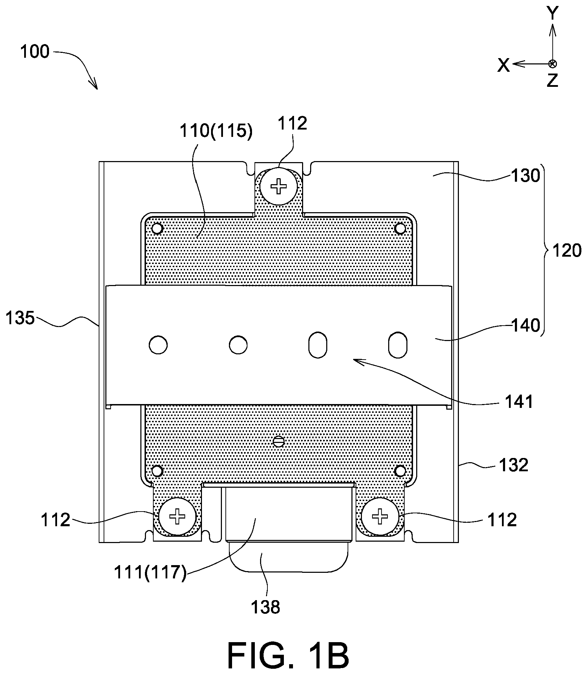

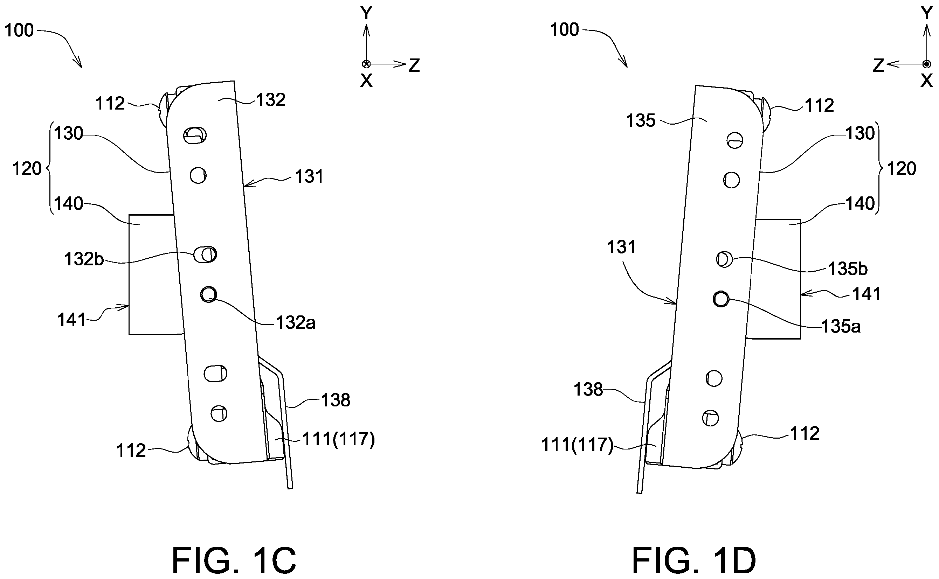

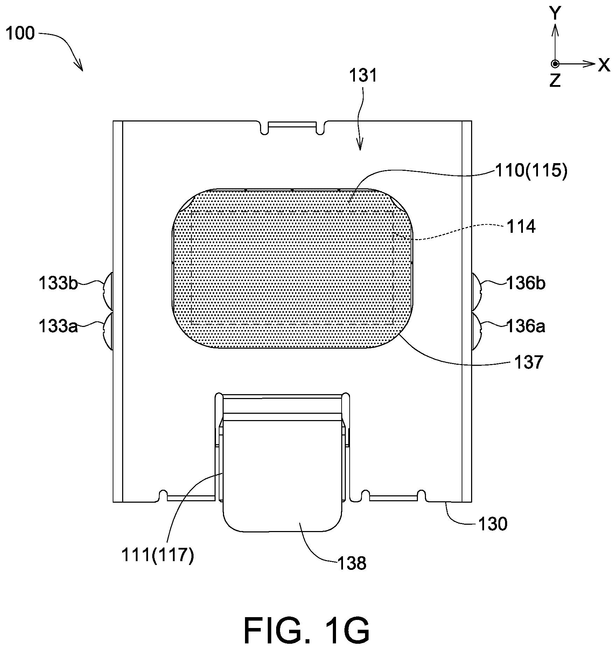

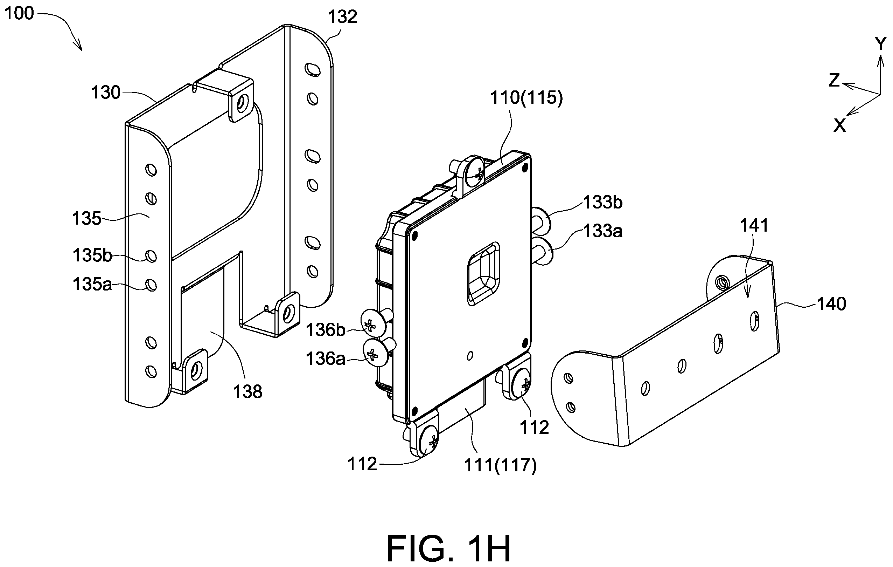

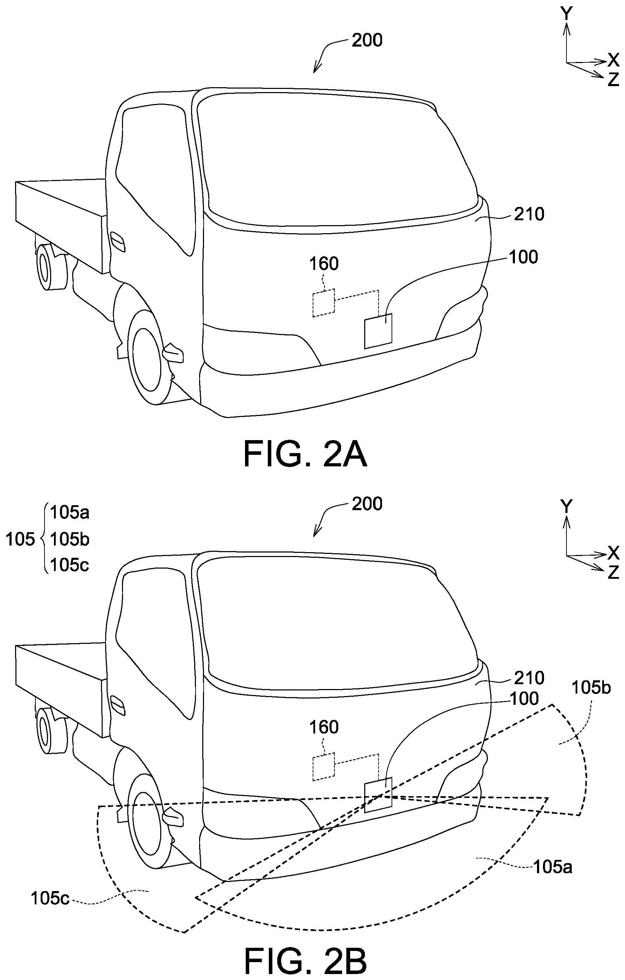

FIG. 1A is a diagram illustrating a stereo view of an example radar device 100, FIG. 1B is a diagram illustrating back view of the example radar device 100, and FIGs. 1C and 1D are diagrams respectively illustrating views of two sides (the firs side 132 and the second side 135) of the example radar device 100 according to one or more embodiments of the present disclosure. Referring to FIGs. 1A and 1B, the radar device 100 includes a radar module 110 configured to generate radar beam, and an adjustment mechanism 120 for mounting the radar module 110. A case 115 of the radar module 110 includes a connection part 111. The connection part 111 is configured to surround a signal connector 117 within the radar module 110. The signal connector 117 is also an inner circuit metal connector of the radar module, such as metal pins, connection pin or pin connector, and may be configured to be coupled to an external electronic control unit (such as the electronic control unit 160 in FIGs. 2A to 2C), for setting the radar module 110 or processing a detection signal (or a reflection signal) of the radar beam from the target. Descriptions of the signal connector 117 is referred to the following FIGs. 1G to 1I and descriptions of the relevant paragraphs.

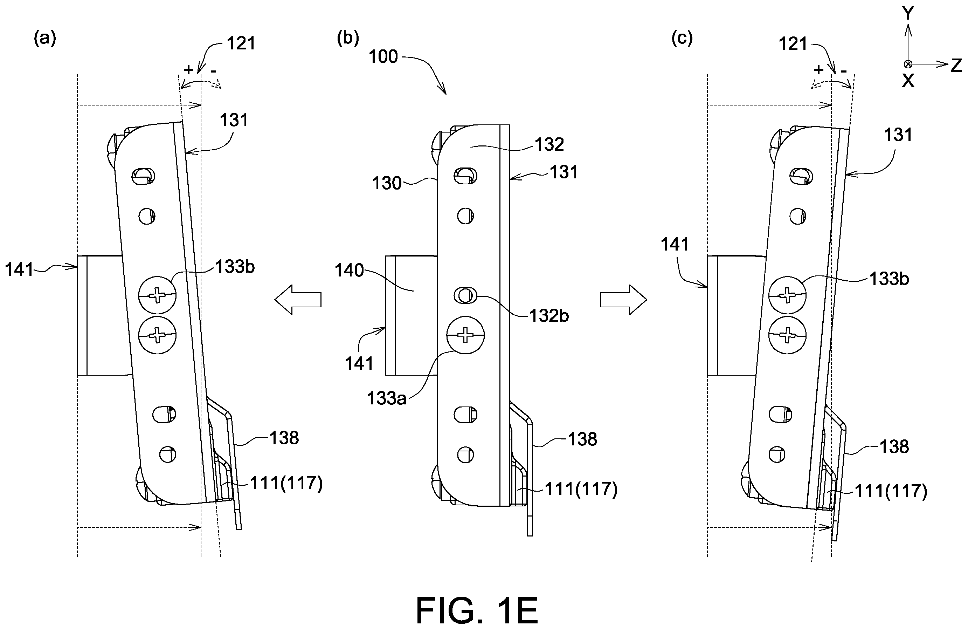

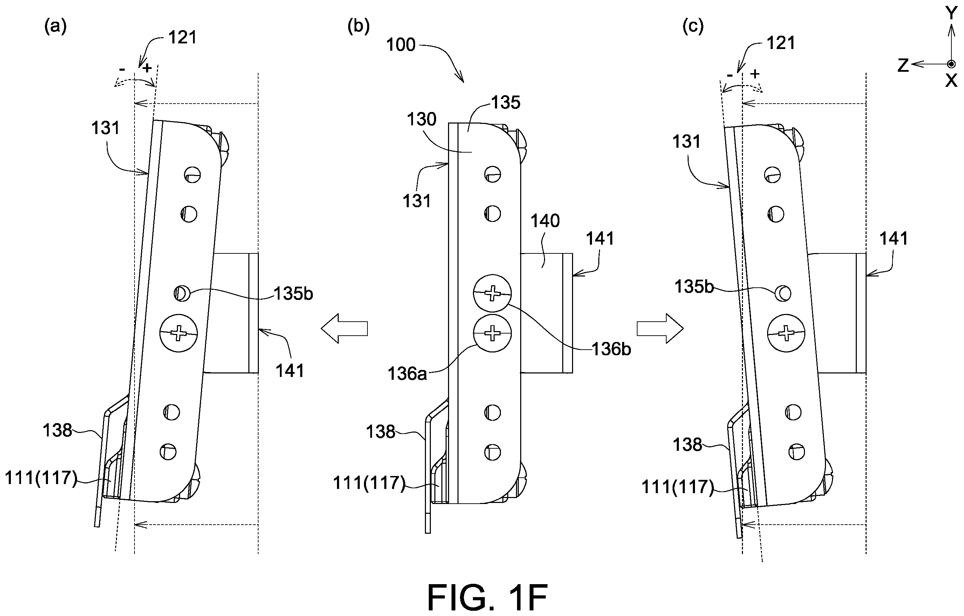

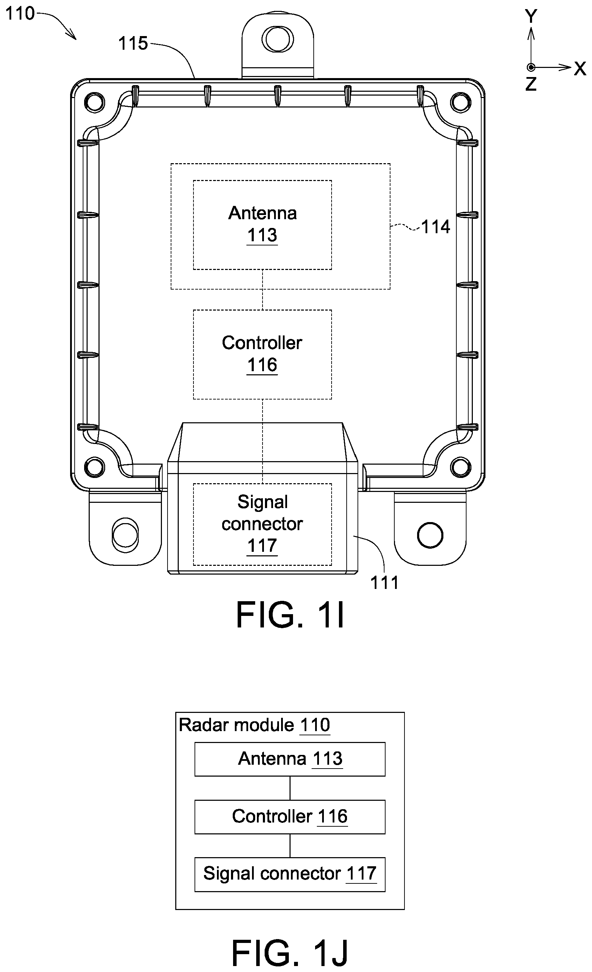

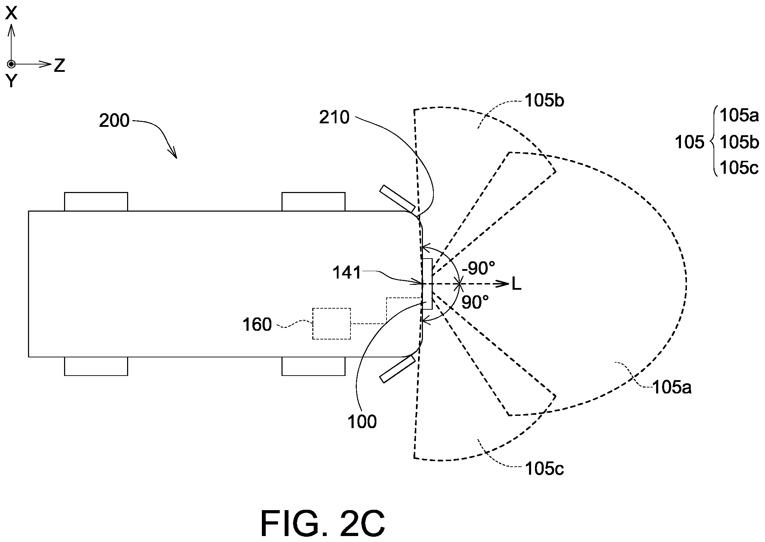

The detail of the radar module 110 will be described referring to FIGs. 1G to 1J as follows. FIGs. 1G to 1I are diagrams respectively illustrating front view, exploded view and front perspective view of the radar device 100 according to one or more embodiments of the present disclosure, and FIG. 1J is a function block diagram illustrating inner components of the radar module 110 according to one or more embodiments of the present disclosure. The adjustment mechanism 120 includes a radar mounting part 130 and a vehicle installation part 140. The radar device 1100 may include a first surface 131 and a second surface 141 opposite to the first surface 131. The first surface 131 is located on the radar mounting part 130 and faces a direction of the generated radar beam (can be referred to FIGs. 2B and 2C and related paragraphs). The second surface 141 is located on the vehicle installation part 140 and faces the vehicle. The vehicle installation part 140 can be used to secure the radar device 100 to the vehicle, for example, by locking the second surface 141 of the vehicle installation part 140 to the front side or the rear side of the vehicle (for example, the first side 210 of the vehicle 200 in FIGs. 2A to 3D). In other words, the second surface 141 of the vehicle installation part 140 faces the front side or the rear side of the vehicle (for example, the first side 210 of the vehicle 200 in FIGs. 2A to 3D). As shown in FIGs. 1A to 1D, the radar mounting part 130 can secure the radar module 110, for example, by locking the radar module 110 to the radar mounting part 130 through multiple fasteners 112. The radar mounting part 130 has an opening 137 as an antenna window, which allows an antenna area (referring to FIGs. 1I and 1J) corresponding to the antenna of the radar module 110 to be exposed to the first surface 131 through the opening 137, and allows the radar beam generated by the antenna in the radar module 110 to pass through the opening 137 and move toward the direction the first surface 131 facing. The radar mounting part 130 also includes a connector protection part 138 that covers the connection part 111 of the radar module 110 to protect the connection part 111 and the signal connector 117 therein on the first surface 131 to prevent the connection part 111 and the signal connector 117 therein from being hit by objects from the first surface 131 (the forward direction of the vehicle) and thereby causing damage. The radar mounting part 130 may be pivotally connected to the vehicle installation part 140 via a rotation axis PA. In some implementations, the radar mounting part 13 may be respectively secured by fasteners (such as fasteners 133a and fasteners 136a in FIGs. 1E and 1F) to an aperture 132a of the first side 132 and the radar mounting part 13 135a of the second side 135 through which the rotation axis PA passes, so that the radar mounting part 130 is able to be pivoted to the vehicle installation part 140 based on the rotation axis PA. Accordingly, the radar mounting part 130 can be adjusted to be pivoted relative to the vehicle installation part 140 based on the rotation axis PA, so that the first surface 131 of the radar mounting part 130 is able to parallel to the second surface 141 of the vehicle installation part 140, or the first surface 131 of the radar mounting part 130 is oriented to at an inclination angle (such as the inclination angle 121 in FIGs. 1E and 1F) relative to the second surface 141 of the vehicle installation part 140. The elevation angle of the radar device and its setting method will be described in detail below with reference to FIGs. 1E and 1F.

FIGs. 1E and 1F are diagrams respectively illustrating angle adjustment settings on two sides of the example radar device 100 according to one or more embodiments of the present disclosure. The radar mounting part 130 can respectively lock the aperture 132a of the first side 132 and the aperture 135a of the second side 135 (through which the aforementioned rotation axis PA passes) by the fasteners 133a and the fasteners 136a, so that the radar mounting part 130 can be pivoted relative to the vehicle installation part 140 based on the rotation axis PA. The first surface 131 of the radar mounting part 130 is oriented to at an inclination angle 121 relative to the second surface 141 of the vehicle installation part 140. Since the radar mounting part 130 can be pivoted on the vehicle installation part 140, the inclination angle 121 can be set to 0 degrees, that is, the first surface 131 of the radar mounting part 130 is parallel to the second surface 141 of the vehicle installation part 140 (as shown in the middle of FIGs. 1E and 1F), or the inclination angle 121 can be adjusted between positive 7 degrees and negative 7 degrees, that is, the first surface 131 of the radar mounting part 130 is not parallel to the second surface 141 of the vehicle installation part 140 (as shown on the left and right sides of FIGs. 1E and 1F).

As shown in FIG. 1C, the first side 132 of the radar mounting part 130 has the aperture 132a (through which the rotation axis PA mentioned above passes) and the aperture 132b, wherein the shape of the aperture 132b is different from that of the aperture132a. In this example, the size of the aperture 132a is the same as the size of the corresponding aperture of the vehicle installation part 140 (not shown). Therefore, as shown in FIG. 1E, the aperture 132a can be locked to the corresponding aperture of the vehicle mounting part 140 (not shown) through the fastener 133a. Also, in this example, as shown in FIG. 1E, the size of the aperture 132b is larger than the size of the corresponding aperture of the vehicle installation part 140 (not shown). That is, when the radar mounting part 130 is set to be oriented to at the inclination angle 121 relative to the vehicle installation part 140 at a specific angle (between positive 7 degrees and negative 7 degrees), the fastener 133b can pass through the aperture 132b with a larger size and be locked to the corresponding aperture of the vehicle installation part (not shown), so that the first surface 131 of the radar mounting part 130 and the second surface 141 of the vehicle installation part 140 are fixed at the set inclination angle 121, as shown in the left diagram (a) and the right diagram (c) of FIG. 1E.

As shown in FIG. 1D, the second side 135 of the radar mounting part 130 has the aperture 135a (through which the aforementioned rotation axis PA passes) and the aperture 135b. In this example, the shape of the aperture 135a is the same as that of the aperture 135b, and the sizes of the aperture 135a and the aperture 135b are the same as the sizes of the corresponding apertures of the vehicle installation part (not shown). Therefore, as shown in FIG. 1F, when the radar mounting part 130 is adjusted to be pivoted to the vehicle installation part 140 with an inclination angle 121 (the inclination angle is not equal to 0), as shown in the left diagram (a) and the right diagram (c) of FIG. 1F, only the aperture 135a can be locked to the corresponding aperture of the vehicle installation part 140 (not shown in the figure) through the fastener 136a, and the aperture 135a cannot be correspondingly locked because it is misaligned with the corresponding aperture of the vehicle installation part (not shown). As shown in the middle diagram (c) of FIG. 1F , when the radar mounting part 130 is adjusted to be pivoted to the vehicle installation part 140 without an inclination angle (the inclination angle is equal to 0, and the first surface 131 is parallel to the second surface 141), the aperture 135a and the aperture 135b can be respectively locked to the corresponding apertures of the vehicle installation part 140 (not shown) by the fasteners 136a and 136b, so that the first surface 131 of the radar mounting part 130 is fixed parallel to the second surface 141 of the vehicle installation part 140.

Referring to FIGs. 1G to 1J, the radar module 110 includes the case 115 and inner components enclosed by the case 115. The inner components enclosed by the case 115 include an antenna 113, a controller 116, and a signal connector 117. The antenna 113 is configured for transmitting or receiving radar beams (or radar signals). The controller 116 is coupled to the antenna 113 and the signal connector 117 to control the antenna 113 to transmit or receive radar beams (or radar signals) and to form the radar detection area. The signal connector 117 can output radar reflection signals, which are generated within the radar detection area and received and processed by the controller 116 according to the control of controller 116, or receive external signals/commands may be received via signal connector 117, allowing the controller 116 to set and operate the radar module 110. The case 115 includes an antenna area 114 corresponding to the antenna 113 and the connection part 111 surrounding the signal connector 117. The connection part 111 surrounding the signal connector 117 can be adapted to the shape of various external connectors connected to the radar module 110 to secure connection between the signal connector 117 and an external connector. It should be understood that the antenna area 114 of the housing 115 is the area where the antenna 113 transmits or receives radar signals on the first surface 131. That is, for the radar module 110 (or antenna 113) to operate properly, the antenna area 114 must not be obstructed by any object. As discussed above, the radar mounting part 130 includes the opening 137 as the antenna window. This antenna window corresponds to the antenna area 114 of the antenna 113 in the radar module 110. Therefore, the opening 137 in the radar mounting part 130 as the antenna window and corresponding to the antenna area 114 of the antenna 113 in the radar module 110 allows the antenna 113 to transmit and/or receive radar beams from the corresponding antenna area 114 of the antenna 113 through the opening 137 (antenna window), thereby generating the radar detection area. The following will describe the installation and setting of the radar device 100 on the vehicle 200 with reference to FIGs. 2A to FIG. 3E.

FIGs. 2A to 2C are diagrams respectively illustrating the example radar device 100 installed on a vehicle 200 according to one or more embodiments of the present disclosure. Referring to FIGs. 2A to 2C, the radar device 100 may be installed on a first side 210 of the vehicle 200 through the aforementioned vehicle installation part 140 of the radar device 100. In one embodiment, the first side 210 may be the front side of the vehicle 200. In another embodiment, the first side 210 may be the rear side of the vehicle 200. As shown in FIGs. 2B and 2C , the radar device 100 can emit multiple radar beams in different directions, which are radar beam 105 a , radar beam 105 b and radar beam 105 c forming a radar detection area 105. In one embodiment, the radar beams 105a, 105b and 105c are respectively transmitted by multiple transmit antennas (TX) to form the radar detection area 105. The radar detection area 105 covers a range of ±90 degrees perpendicular to the normal line L of the second surface 141 of the radar device 100 and exceeds the left and right sides of the vehicle, that is, the radar detection area 105 covers an area beyond the left and right sides of the first side 210. When a moving object appears in the radar detection area 105 and is within the blind spot of the driver's vision, the moving object can be detected by the radar beams 105a to 105c. The radar device 100 may be coupled to an electronic control Unit (ECU) 160. In some implementations, the ECU 160 may set a warning area according to the radar detection area 105 composed of the radar beams 105a, 105b and 105c, and only when a target object is detected in the warning area, a warning or target-related information will be provided. In some implementations, the ECU 160 can classify the target objects while detecting and warning them according to preset conditions when the radar beams 105a, 105b and 105c detect the target objects, such as analyzing the energy and position of the radar reflected beams to distinguish whether the target objects are vehicles, people, or other objects.

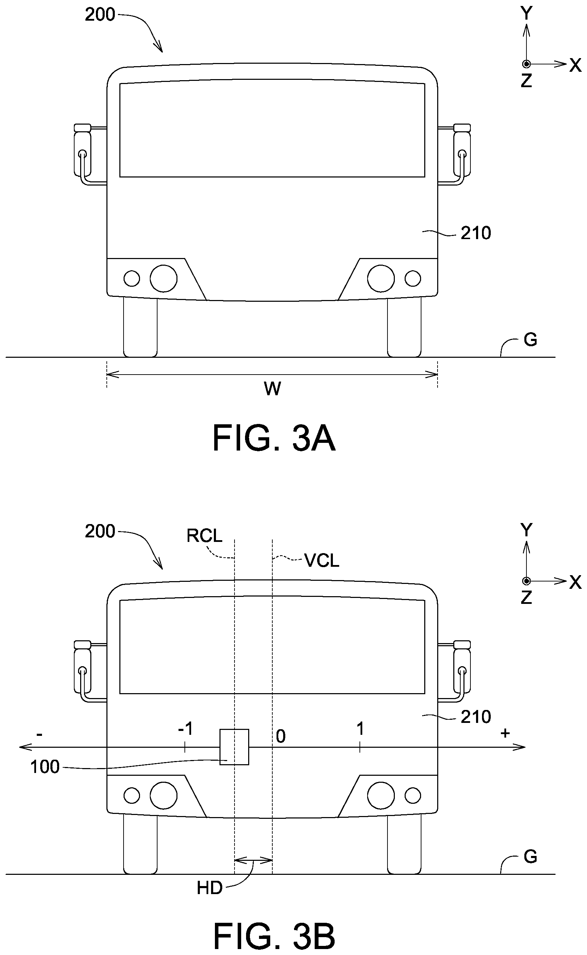

Since the radar device 100 is installed at different positions on the first side 210 of the vehicle 200, the detection range of the radar beam will be affected. Therefore, after the radar device 100 is installed on the first side of the vehicle 200, the radar device 100 must be calibrated or set, such as the setting of the detection range or warning area of the radar device 100 in the ECU 160. The following will describe in detail settings of the example radar device installed on the vehicle with reference to FIGs. 3A to 3E.

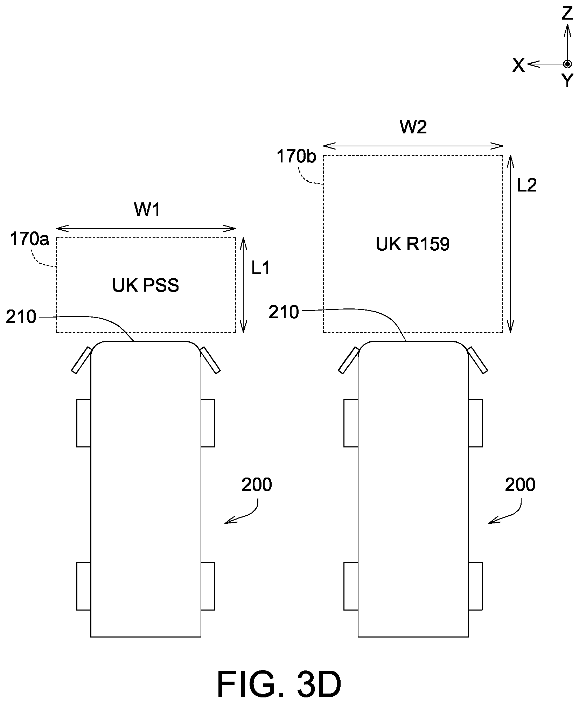

FIGs. 3A to 3E are diagrams respectively illustrating settings of the example radar device 100 installed on the vehicle 200 according to one or more embodiments of the present disclosure. First, since the width of the warning area of the radar device 100 (as shown in FIG. 3D) is related to the width W of the first side 210 shown in FIG. 3A (as shown in FIG. 3D), the value of the width W of the first side 210 of the vehicle 200 needs to be input into the ECU 160 coupled to the radar device 100.

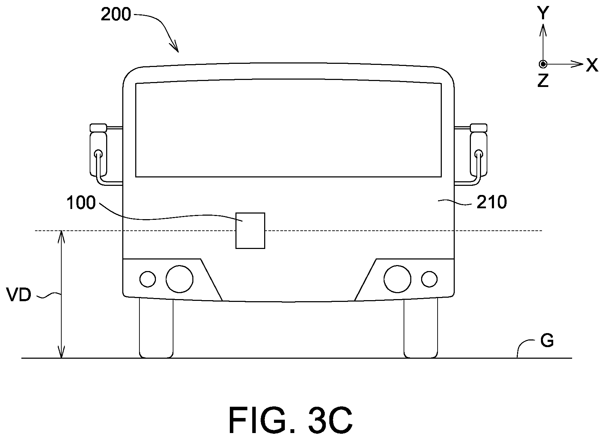

Since the warning area of the radar device 100 must cover all areas in front of the first side 210, the installation position of the radar device 100 on the first side 210 of the vehicle 200 must be determined. As shown in FIG. 3B, the value of the horizontal distance HD between the center line RCL of the radar device 100 and the center line VCL of the first side 210 of the vehicle 200 is input into the ECU 160 coupled to the radar device 100. And, as shown in FIG. 3C , the vertical distance VD between the center point of the radar device 100 and the ground G, that is, the installation height of the radar device 100, is input into the ECU 160 coupled to the radar device 100.

As discussed above, when the radar device 100 is installed on the first side 210 of the vehicle 200, since the inclination angle 121 (as shown in FIGs. 1A to 1F) between the first surface 131 (as shown in FIGs. 1A to 1F) and the second surface 141 (as shown in FIGs. 1A to 1F) of the radar device 100 can be adjusted, the area covered by the radar detection area 105 of the radar beams 105a to 105c emitted by the radar device 100 can be synchronously adjusted with the difference in the inclination angle 121, that is, the inclination angle 121 can be changed according to the different areas to be covered. The inclination angle 121 can be determined according to the vertical distance VD between the center point of the radar device 100 and the ground G (the installation height of the radar device 100). In one embodiment, the vertical distance VD ranges from 40 cm to 140 cm, and the corresponding adjustment range of the inclination angle 121 is between positive 7 degrees and negative 7 degrees. In one embodiment, the larger the vertical distance VD is, the smaller the inclination angle 121 is. For example, when the vertical distance VD is 40 cm, the inclination angle 121 can be adjusted to positive 7 degrees; when the vertical distance VD is between 70 cm and 110 cm, the inclination angle can be adjusted to 0; or when the vertical distance VD is between 110 cm and 140 cm, the inclination angle can be adjusted to negative 7 degrees.

As discussed above, after determining the width W of the first side 210 of the vehicle 200, the horizontal distance HD between the center line RCL of the radar device 100 and the center line VCL of the first side 210 of the vehicle 200, the vertical distance VD between the center point of the radar device 100 and the ground G, and the inclination angle 121 between the first surface and the second surface of the radar device 100, the ECU 160 of the radar device 100 (as shown in FIGs. 2A to 2C) can determine a warning area in the radar detection area 105 of the radar device 100 based on this information, wherein the width of the warning area is greater than the width W of the first side 210 of the vehicle 200, such as the warning area 170a and the warning area 170b shown in FIG. 3D.

FIG. 3D shows that according to different embodiments, the ECU sets different warning areas, warning area 170a or warning area 170b within the detection area of the radar beam, wherein the warning area 170a is set according to the UK PSS standard, and the warning area 170b is set according to the EU standard (UN R159). According to UK PSS, the width W1 of the warning area 170a is the width W of the first side 210 plus 1 meter, and the length L1 of the warning area 170a is 2 meters. According to EU standards (UN R159), the width W2 of the warning area 170b is the width W of the first side 210 plus 1 meter, and the length L2 is 3.7 meters. When the target object is located in the warning area 170a or the warning area 170b, the radar device will issue a warning, for example, the ECU will prompt the user of the vehicle through audio or light.

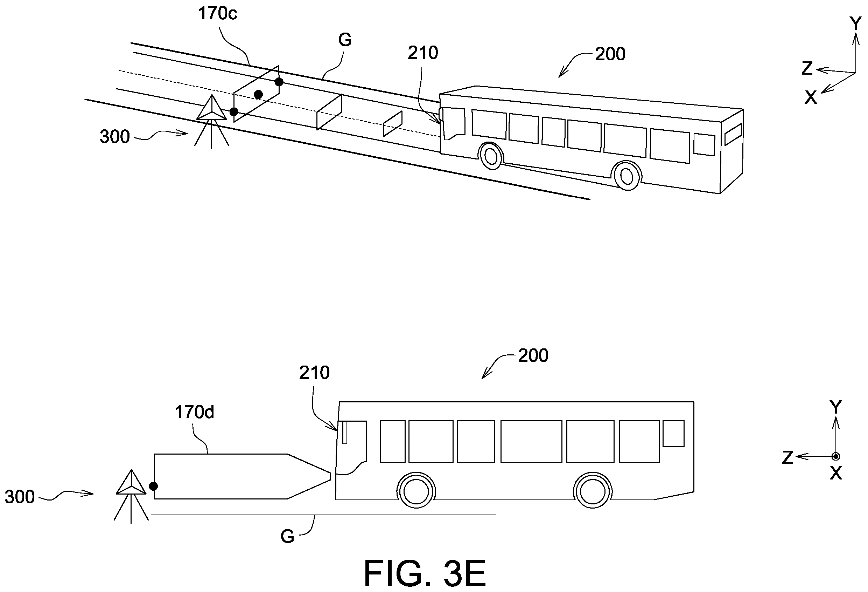

In some implementations, the set warning area can be tested using a target object. As shown in FIG. 3E, the target object 300 may be sequentially placed in the center and on both sides of the warning area 170c for calibration test to adjust the installation position of the radar device on the first side 210 of the vehicle 200, or to adjust the aforementioned inclination angle 121 (as shown in FIGs. 1E and 1F). Similarly, as shown in FIG. 3E , the target object may be placed at the lower limit or upper limit (not shown) of the height of the warning area 170d , for example, to adjust the aforementioned inclination angle 121 (as shown in FIGs. 1E and 1F).

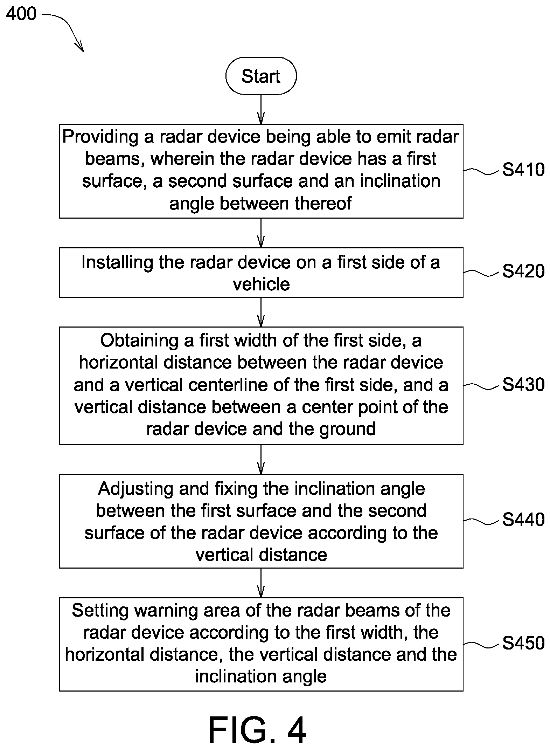

FIG. 4 is a flowchart illustrating an installation process of the example radar device according to one or more embodiments of the present disclosure. In step S410, a radar device (such as radar device 100 in FIGs. 1A to 1F) is provided being able to emit radar beams (such as radar beams 105a, 105b and 105c in FIGs. 2B to 2C). In step S420, the radar device is installed on a first side of a vehicle (such as the first side 210 of the vehicle 200 in FIGs. 2A to 3D), for example, by a user. In some implementations, the first side of the vehicle is the front side or the rear side of the vehicle, the radar device includes a first surface facing the direction of the radar beam and a second surface facing the front side or the rear side of the vehicle, and an inclination angle is between the first surface and the second surface (such as the inclination angle 121 in FIGs. 1E and 1F). In step S430, a first width of the first side (such as width W of the first side 210 of the vehicle 200 in FIG. 3A), a horizontal distance between the radar device and a vertical centerline of the first side (such as the horizontal distance HD between the centerline RCL of the radar device 100 and the centerline VCL of the first side 210 of the vehicle 200 in FIG. 3B), and a vertical distance between a center point of the radar device and the ground (such as the vertical distance VD between the center point of the radar device 100 and the ground G in FIG. 3C) are obtained, for example, by inputs of user. In step S440, the inclination angle between the first surface and the second surface of the radar device (such as the inclination angle 121 in FIGs. 1E and 1F) is adjusted and fixed according to the vertical distance, for example, by an ECU. In step S450, a warning area of the radar beam of the radar device is set according to the first width, the horizontal distance, the vertical distance, and the inclination angle. The warning area includes a second width that is not less than the first width, for example, set by the ECU.

In certain configurations, the installation process further includes providing the ECU (such as the ECU 160 of FIGs. 2A to 2C) coupled to the radar device.

In certain configurations, the installation process further includes setting a warning area (such as the warning area 170a, warning area 170b in FIG. 3D and the warning area 170c, warning area 170d in FIG. 3E) in the radar detection area.

In certain configurations, the installation process further includes placing, sequentially, a target object at a center and left and right sides of the warning area for calibration test to adjust an installation position of the radar device on the first side of the vehicle or adjust the inclination angle, as shown in FIG. 3E.

In certain configurations, the installation process further includes placing a target object at the upper and lower limits of a detection height of the warning area for adjusting the inclination angle, as shown in FIG. 3E.

In certain configurations, the vertical distance is between 40 cm and 140 cm, and the inclination angle is between positive 7 degrees and negative 7 degrees.

According to the techniques provided by the present disclosure, an adjustment mechanism can be used to adjust the radar device, thereby simultaneously adjusting the detection area of the radar module, allowing the radar module to detect and locate targets within the detection area forming by beamforming. Additionally, by setting the radar installation position, height, and angle, the radar module's detection area can be adjusted, and a warning area can be set within the detection area to warn or prompt targets within the warning area, further enabling the targets to be classified. Furthermore, according to the techniques provided by the present disclosure, the adjustment mechanism of the radar device, in addition to the aforementioned functions, also includes an opening as an antenna window and a connector protection part for protecting the connection part (and signal connector) of the radar module. This effectively protects the radar module from the front of the vehicle, while also exposing the antenna area of the radar module from the opening as the antenna window, preventing interference with the antenna area corresponding to the antenna within the radar module when transmitting and/or receiving radar signals.

While this document may describe many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination in some cases can be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few examples and implementations are disclosed. Variations, modifications, and enhancements to the described examples and implementations and other implementations can be made based on what is disclosed.

## Claims

1. A radar device (100) for being installed on a vehicle (200), comprising:
a radar module (110), configured to generate a radar detection area (105);
an adjustment mechanism (120), comprising:
a vehicle installation part (140), configured to be mounted on a first side (210) of the vehicle (200); and
a radar mounting part (130), pivotally connected to the vehicle installation part (140), wherein the radar mounting part (130) is able to be pivoted relative to the vehicle installation part (140), and the radar mounting part (130) is configured to secure the radar module (110); and
a plurality of fasteners (133a, 133b, 136a, 136b), coupling the vehicle installation part (140) and the radar mounting part (130),
wherein the radar mounting part (130) includes a first aperture (132a, 132a) and a second aperture (135a, 135b) corresponding to the plurality of fasteners (133a, 133b, 136a, 136b), wherein a shape of the first aperture (132a, 132a) is different from a shape of the second aperture (135a, 135b).

2. The radar device (100) according to claim 1, further comprising a first surface (131) and a second surface (141) opposite to the first surface (131),
wherein the first surface (131) is located on the radar mounting part (130) and faces a direction same to an emission direction of a radar beam generated by the radar module (110), and the second surface (141) is located on the vehicle installation part (140) and faces the vehicle (200),
wherein, by adjusting an angle at which the radar mounting part (130) is pivoted relative to the vehicle installation part (140), the first surface (131) is parallel to the second surface (141), or the first surface (131) is oriented to at an inclination angle relative to the second surface (141).

3. The radar device (100) according to claim 2, wherein the inclination angle is between positive 7 degrees and negative 7 degrees.

4. The radar device (100) according to anyone of the claims 1 to 3, further comprising a warning area (170a, 170b) located in the radar detection area (105), wherein the warning area covers (170a, 170b) a first width (W1, W2) located in front of the first side (210), and the first width (W1, W2) is greater than a second width (W) of the first side.

5. A method for installing a radar device (100) for a vehicle (200) on the ground, comprising:
providing a radar device (100) configured to generate a radar detection area (105);
mounting the radar device (100) on a first side (210) of the vehicle (200), wherein the radar device (100) comprises a first side (131) facing a direction same to an emission direction of a radar beam generated by the radar device (100), and a second surface (141) facing the first side (210) of the vehicle (200), and an inclination angle is between the first surface (131) and the second surface (141);
obtaining a first width (W) of the first side (210), a horizontal distance (HD) between the radar device (100) and a vertical center line (VCL) of the first side (210), and a vertical distance (VD) between a center point of the radar device (100) and the ground (G);
adjusting and fixing the inclination angle between the first surface (131) and the second surface (141) of the radar device (100) according to the vertical distance (VD); and
setting a warning area (170a, 170b) in the radar detection area (105) according to the first width (W), the horizontal distance (HD), the vertical distance (VD) and the inclination angle,
wherein the warning area (170a, 170b) includes a second width (W1, W2) not less than the first width (W).

6. The method according to claim 5, further comprising placing a target object (300) at the upper and lower limits of a detection height of the warning area (170c, 170d) for adjusting the inclination angle.

7. The installation method according to claim 5 or 6, wherein the vertical distance (VD) is between 40 cm and 140 cm, and the inclination angle is between positive 7 degrees and negative 7 degrees.

8. A radar device (100) for being installed on a vehicle (200) on the ground (G), comprising:
a radar module (110), comprising:
an antenna (113), configured for transmitting or receiving a radar signal;
a signal connector (117); and
a case (115), covering the antenna (113) and the signal connector (117) and comprising an antenna area (114) corresponding to the antenna (113) and a connection part (111) surrounding the signal connector (117); and
an adjustment mechanism (120), comprising:
a radar mounting part (130), configured for mounting the radar module (110) on the vehicle (200) and including an antenna window (137) and a connector protector (138),
wherein the antenna window (137) exposes the antenna area (114), and the connector protector (138) covers the connection part (111).

9. The radar device (100) according to claim 8, wherein the radar module (110) further comprising a controller (116) coupled to the antenna (113) and the signal connector (117) and being covered by the case (115),
wherein the controller (116) is configured for controlling the antenna (113) to generate a radar detection area (105) from the antenna area (114) corresponding to the antenna (113) through the antenna window (137), and for receiving a radar reflection signal generated in the radar detection area (105) to output a signal through the signal connector (117).

10. The radar device (100) according to claim 8 or 9, wherein the adjustment mechanism (120) further comprising a vehicle installation part (140),
wherein the radar mounting part (130) is coupled to the vehicle installation part (140), and the radar mounting part (130) is able to be pivoted relative to the vehicle installation part (140).

11. The radar device (100) according to anyone of the claims 8 to 10, further comprising a first surface (131) and a second surface (141) opposite to the first surface (131),
wherein the first surface (131) is located on the radar mounting part (130) and faces a direction same to an emission direction of a radar beam generated by the radar module (110), and the second surface (141) is located on the vehicle installation part (140) and faces the vehicle (200),
wherein, by adjusting an angle at which the radar mounting part (130) is pivoted relative to the vehicle installation part (140), the first surface (131) is able to be parallel to or has an inclination angle relative to the second surface (141).

12. The radar device (100) according to claim 11, wherein the inclination angle is between positive 7 degrees and negative 7 degrees.

13. The radar device (100) according to claim 10, further comprising a plurality of fasteners (133a, 133b, 136a, 136b) coupling the radar mounting part (130) and the vehicle installation part (140).

14. The radar device (100) according to claim 13, wherein the radar mounting part includes a first aperture (132a, 132a) and a second aperture (135a, 135b) corresponding to the plurality of fasteners (133a, 133b, 136a, 136b), wherein a shape of the first aperture (132a, 132a) is different from a shape of the second aperture (135a, 135b).

15. The radar device (100) according to anyone to the claims 8 to 14, wherein a vertical distance (VD) is between a center point of the radar device (100) and the ground, (G) and the vertical distance (VD) is between 40 cm and 140 cm.
